# EUROPEAN PATENT APPLICATION

(11) **EP 4 495 726 A1**
(43) Date of publication of application: **22.01.2025**
(21) Application number: 24189622.4
(22) Date of filing: 19.07.2024
(51) Int. Cl.: G05D 1/242, G05D 1/246, G05D 1/648, G05D 105/10, G05D 107/00, G05D 109/15, G05D 111/20, G05D 111/50

(54) **NAVIGATION OF DYNAMIC POOL EQUIPMENT**

(30) Priority: 20.07.2023 IL 30462223
(71) Applicant: Maytronics Ltd., 1935000 Kibbutz Yizrael (IL)
(72) Inventor: GOLDENBERG, Gilad, 4465138 Kfar-Saba (IL); LERNER, Nachum, 2470704 Akko (IL); HERSZENHAUT, Leo, 3244305 Haifa (IL)
(74) Representative: Tiburzi, Andrea

(57) **Abstract**

A method of navigating a dynamic pool equipment unit in a water pool, comprising: receiving sensory data captured by a plurality of sensors of a dynamic pool equipment unit moving in a water pool, mapping, based on analysis of the sensory data, one or more geometrically distinguishable surfaces of the water pool which is geometrically distinguishable from any adjacent surface of the water pool, generating a map of the water pool based on the mapped one or more geometrically distinguishable surface, and outputting the water pool map for navigating one or more dynamic pool. Wherein the plurality of sensors employ a plurality of different sensing technologies.

## Description

### BACKGROUND

The present invention, in some embodiments thereof, relates to navigating dynamic pool equipment units, and, more specifically, but not exclusively, to navigating dynamic pool equipment units in water pools mapped using a plurality of sensors employing a plurality of different sensing technologies.

Automated pool equipment units, systems, platforms and/or devices are widely used to carry out one or more tasks and/or operations, for example, cleaning, water purification, maintenance, and/or the like in bodies of water, specifically in artificial bodies of water such as, for example, swimming pools, reservoirs, fountains, and/or the like.

The automated pool equipment may often comprise dynamic units, for example, a pool robot, a pool cleaning robot, a pool maintenance robot, a water treatment system, and/or the like which may dynamically move in the water pool, for example, on its floor surface, walls, and/or the like to execute their assigned tasks.

In order for the dynamic pool equipment units to effectively perform their tasks, for example, with increased accuracy, reduced time, and/or the like, the dynamic units may need to accurately navigate in the water bodies.

### SUMMARY

According to a first aspect of the present invention there is provided a computer implemented method of navigating a dynamic pool equipment unit in a water pool, comprising using one or more processors for:
- Receiving sensory data captured by a plurality of sensors of a dynamic pool equipment unit moving in a water pool. The plurality of sensors employ a plurality of different sensing technologies;
- Mapping, based on analysis of the sensory data, one or more geometrically distinguishable surfaces of the water pool which is geometrically distinguishable from any adjacent surface of the water pool;
- Generating a map of the water pool based on the mapped one or more geometrically distinguishable surface.
- Outputting the water pool map for navigating one or more dynamic pool equipment units in the water pool during execution of one or more dynamic activities.

According to a second aspect of the present invention there is provided a system for navigating a dynamic pool equipment unit in a water pool, comprising a plurality of sensors employing a plurality of different sensing technologies, and one or more processors adapted to execute a code, the code comprising:
- Code instructions to receive sensory data captured by a plurality of sensors of a dynamic pool equipment unit moving in a water pool. The plurality of sensors employ a plurality of different sensing technologies.
- Code instructions to map, based on analysis of the sensory data, one or more geometrically distinguishable surfaces of the water pool which is geometrically distinguishable from any adjacent surface of the water pool.
- Code instructions to generate a map of the water pool based on the mapped one or more geometrically distinguishable surfaces.
- Code instructions to output the water pool map for navigating one or more dynamic pool equipment units in the water pool during execution of one or more dynamic activities.

In a further implementation form of the first and/or second aspects, each geometrically distinguishable surface is geometrically distinguishable from its adjacent surfaces by one or more geometric attributes of a group comprising: a different depth, and a different slope.

In a further implementation form of the first and/or second aspects, the dynamic pool equipment unit is operated to explore the water pool starting from a random start point to search for one or more local highest points of the water pool which is mapped as a highest surface.

In a further implementation form of the first and/or second aspects, the dynamic pool equipment unit is operated to explore the water pool by moving in a plurality of directions from each mapped distinguishable surface.

In a further implementation form of the first and/or second aspects, mapping one or more of the geometrically distinguishable surfaces is based on one or more motion parameters of the dynamic pool equipment unit derived from the analysis of the sensory data. The one or more motion parameters are selected from a group comprising: orientation, angular velocity, acceleration, speed, depth, and/or distance.

In a further implementation form of the first and/or second aspects, mapping one or more of the geometrically distinguishable surfaces is based on positioning of one or more fixed elements identified in the water pool based on the analysis of the sensory data.

In a further implementation form of the first and/or second aspects, the plurality of sensors comprise one or more pressure sensors adapted to measure a depth of the dynamic pool equipment unit.

In a further implementation form of the first and/or second aspects, the plurality of sensors comprise one or more gyroscopes adapted to measure an orientation of the dynamic pool equipment unit.

In a further implementation form of the first and/or second aspects, the plurality of sensors comprise one or more accelerometers adapted to measure an acceleration of the dynamic pool equipment unit.

In a further implementation form of the first and/or second aspects, the plurality of sensors comprise one or more magnetometers adapted to measure an absolute direction of the dynamic pool equipment unit.

In a further implementation form of the first and/or second aspects, the plurality of sensors comprise one or more image sensors adapted to capture images of an environment surrounding the dynamic pool equipment unit.

In a further implementation form of the first and/or second aspects, the plurality of sensors comprise one or more low-end sound navigation and ranging (SONAR) sensors adapted to map objects in the water pool.

In a further implementation form of the first and/or second aspects, the plurality of sensors comprise one or more low-end light detection and ranging (LiDAR) sensors adapted to map objects in the water pool.

In a further implementation form of the first and/or second aspects, the plurality of sensors comprise one or more proximity sensors adapted to measure a distance of the dynamic pool equipment unit from one or more nearby objects.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks automatically. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of methods and/or systems as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars are shown by way of example and for purposes of illustrative discussion of embodiments of the invention. In this regard, the description taken with the drawings makes apparent to those skilled in the art how embodiments of the invention may be practiced.

In the drawings:
FIG. 1 is a flowchart of an exemplary process of mapping of a water pool explored by a dynamic pool equipment unit based on analysis of sensory data captured by a plurality of sensors employing a plurality of sensing technologies, according to some embodiments of the present invention;
FIG. 2 is a schematic illustration of an exemplary system for mapping of a water pool explored by a dynamic pool equipment unit based on analysis of sensory data captured by a plurality of sensors employing a plurality of sensing technologies, according to some embodiments of the present invention;
FIG. 3 is a schematic illustration of an exemplary water pool mapped based on analysis if a plurality of sensors employing a plurality of sensing technologies, according to some embodiments of the present invention;
FIG. 4A is a flowchart schematically representing an optional flow of operations for magnetometer calibration that may be utilized in mapping of a water pool explored by a dynamic pool equipment unit, according to some embodiments;
FIG. 4B is a flowchart schematically representing an optional flow of operations for pool setup that may be utilized in mapping of a water pool explored by a dynamic pool equipment unit, according to some embodiments;
FIG. 4C is a flowchart schematically representing an optional flow of operations for pool setup post-processing that may be utilized in mapping of a water pool explored by a dynamic pool equipment unit, according to some embodiments;
FIG. 5A is a schematic illustration of exemplary multi direction sonar arrangements that may each be utilized in mapping of a water pool explored by a dynamic pool equipment unit, according to some embodiments;
FIG. 5B is a flowchart schematically representing an optional flow of operations for sonar data analysis that may be utilized in mapping of a water pool explored by a dynamic pool equipment unit, according to some embodiments;
FIG. 5C is a schematic illustration of an exemplary sonar data analysis that may be utilized in mapping of a water pool explored by a dynamic pool equipment unit, according to some embodiments; and
FIG. 6 is a flowchart schematically representing an optional flow of operations for navigating a dynamic pool equipment unit in a water pool by tracking dirt imaged on camera, according to some embodiments.

### DETAILED DESCRIPTION

The present invention, in some embodiments thereof, relates to navigating dynamic pool equipment units, and, more specifically, but not exclusively, to navigating dynamic pool equipment units in water pools mapped using a plurality of sensors employing a plurality of different sensing technologies.

According to some embodiments of the present invention, there are provided methods, systems and computer program products for navigating dynamic pool equipment units in water pools, for example, a pool, a swimming pool, a water reservoir, a fountain and/or the like by mapping the water pools while explored by dynamic pool equipment unit based on analysis of sensory data captured by a plurality of sensors.

In particular, the sensory data analyzed to map the surroundings of the pool equipment unit may be captured (measured) by a plurality of sensors employing a plurality of sensing technologies, for example, a pressure sensing, a motion sensing (e.g., gyroscope, accelerometer, speedometer, odometer, etc.), magnetometer, proximity sensing, imaging (e.g., camera, Infrared camera, thermal camera, etc.), range sensing (Laser Imaging Detection and Ranging (LiDAR), Sound Navigation and Ranging (SONAR), etc.), and/or the like.

Moreover, the sensors may typically be low-end, low cost sensors which may capture sensory data which separately may be insufficiently accurate but when analyzed jointly may enable efficient, high accuracy, and reliable mapping of the water pool thus eliminating the need for high-end, highly accurate sensors such as, for example, a SONAR, which may increase cost, and/or complexity of deployment, operation, and/or analysis of their captured sensory data.

The dynamic pool equipment unit, for example, a pool robot, a pool cleaning robot, pool floating platform, floating skimmers, a pool maintenance robot, a water treatment system, and/or the like may be operated to explore the water pool in order to identify features of the water pool, in particular structural, and/or geometrical features of the water pool, for example, location, dimensions, depth, slope and/or the like of surfaces identified in the water pool. Specifically, the structural, and/or geometrical features of the water pool be identified based on analysis of merged sensory data comprising sensory data captured by the plurality of sensors employing the plurality of different sensing technologies.

Based on analysis of the identified structural, and/or geometrical features, each surface in the water pool which is geometrically distinguishable from any adjacent surface(s) may be mapped according to one or more geometric attributes, for example, depth, slope, location, and/or the like.

The process of operating the pool equipment unit may be repeated and continued, typically based on the mapped features and already mapped geometrically distinguishable surfaces, until the entire water pool is explored and its surfaces are fully mapped.

Optionally, one or more of the geometrically distinguishable surfaces of the water pool may be mapped based on and/or with respect to positioning (e.g., location, orientation, elevations, etc.) of one or more fixed elements identified in the water pool, for example, a lamp, a ladder, a jet, a skimmer, a drain opening, a marking, docking station, out of water exiting mechanism, and/or the like which are statically fixed and typically unmovable in the water pool.

In order to effectively map the water pool and its geometrically distinguishable surfaces, the pool equipment unit may be operated according to one or more movement, and/or exploration patterns, methods, and/or algorithms. For example, the pool equipment unit starting to move from a random location (point) in the water pool may be operated to search for one or more highest surfaces of the water pool. In another example, the pool equipment unit may be operated to move in a plurality of different directions from each geometrically distinguishable surface detected and mapped in the water pool. In some embodiments, one may use one or more sensors such as accelerometer, gyroscope, pressure sensor and/or the like to verify that a surface area is the highest among all detected areas, and/or use a magnetometer to verify a direction of such surface area. Optionally, the surface area may also be distinguished using a SONAR map obtained for that surface area, using sonar data analysis in which points and directions of interest may be determined, as described further herein.

While traversing the entire water pool, or optionally after traversing the entire water pool, and mapping its geometrically distinguishable surfaces, a map of the water pool may be generated and output for navigating one or more dynamic pool equipment units deployed in the water pool to execute one or more dynamic activities, tasks, mission, and/or operations, for example, pool cleaning, maintenance, water purification, and/or the like. Additionally or alternatively, mapped surfaces of the water pool (or "nodes" as may also be referred to herein) may be used to navigate to basic important points, i.e. locations of interest, in the water pool that the dynamic pool equipment units may always return to.

Generating maps of water pools by mapping their geometrically distinguishable surfaces based on sensory data captured by a plurality of low-cost sensors of dynamic pool equipment units deployed in the water pools and using the maps to navigate in the water pools may present significant benefits and advantages compared to existing pool equipment navigation methods and systems.

First, some of the existing pool equipment navigation systems may rely on motion data captured by one or more motion sensors. Mapping a water pool based on motion data alone may highly limited which may yield a limited accuracy map of the water pool. In contrast, merging sensory data captured by a plurality of sensors employing a plurality of different sensing technologies and jointly analyzing the merged sensory data may compensate for inaccuracies and/or limitations in the sensory data captured by any single sensor and/or any single type of sensors employing a certain sense technology. In other words, while each of the multiple different sensing technologies may suffer deficiencies and/or inaccuracies, whether inherent, local and/or temporal, such deficiencies and/or inaccuracies may vary and/or differ between different sensing technologies. Therefore, mapping the surrounding of the pool equipment unit based on combined, merged and/or fused sensory data captured by sensors employing a plurality of different sensing technologies may eliminate, overcome, and/or compensate for inaccuracies traced, and/or typical to any single sensing technology.

Moreover, some of the existing pool equipment navigation systems may use one or more high accuracy SONAR sensors which are complex, and high cost thus significantly complicating deployment, and/or maintenance of the pool equipment units as well as significantly increasing costs. Using a plurality of low-cost sensors on the other hand, may significantly reduce the deployment and/or maintenance cost and/or complexity of the pool equipment units while maintaining high mapping and navigation performance, for example, accuracy, efficiency and/or reliability. The high mapping and/or navigation performance is achieved through joint analysis of merged sensory data captured by the multitude of sensors employing multiple different sensing technologies thus compensating for possible deficiencies in the sensory data captured by any single sensor and more specifically by any single sensing technology.

Furthermore, mapping geometrically distinguishable surfaces of the water pool according to positioning of fixed elements may further increase performance of the water pool mapping, for example, accuracy, efficiency and/or reliability.

In addition, operating the pool equipment unit to explore the water pool according to the exploration patterns, and/or algorithms may significantly increase efficiency of exploring the water pool, for example, reduce exploration time, increase exploration coverage, i.e., efficiently cover the area of the water pool, and/or the like.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer program code comprising computer readable program instructions embodied on a computer readable medium may be transmitted using any appropriate medium, including but not limited to wireless, wire line, optical fiber cable, RF, etc., or any suitable combination of the foregoing.

The computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

The computer readable program instructions for carrying out operations of the present invention may be written in any combination of one or more programming languages, such as, for example, assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

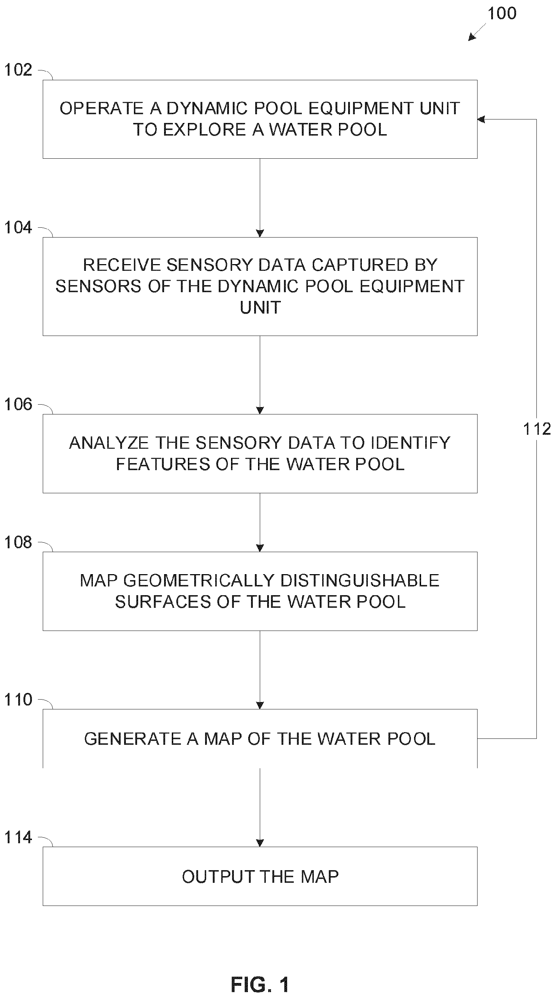

Referring now to the drawings, FIG. 1 is a flowchart of an exemplary process of mapping of a water pool explored by a dynamic pool equipment unit based on analysis of sensory data captured by a plurality of sensors employing a plurality of sensing technologies, according to some embodiments of the present invention.

An exemplary process 100 may be executed to operate a dynamic pool equipment unit deployed to explore a water pool and map the water pool based on analysis of sensory data captured by sensors of the dynamic pool equipment unit.

In particular, the sensory data may be captured (measured) by a plurality of sensors employing a plurality of sensing technologies, for example, a pressure sensor, a motion sensor (e.g., gyroscope, accelerometer, odometer, etc.), a magnetometer, an image sensor, a LiDAR sensor (e.g., purple crown LiDAR, etc.), a SONAR sensor (specifically a low-cost SONAR sensor), and/or the like.

The dynamic pool equipment unit may be operated to move in the water pool and explore it to identify each surface, interchangeably designated node herein after, in the water pool which is geometrically distinguishable from any adjacent surface of the water pool according to one or more geometric attributes, for example, depth, slope, location, and/or the like.

The dynamic pool equipment unit may be operated to explore and traverse the water pool according to one or more movement and/or coverage algorithms. For example, the dynamic pool equipment unit which may start moving from one or more randomly selected points in the water pool may be operated to search for one or more highest surfaces of the water pool by trying to move in each of a plurality of directions from each geometrically distinguishable surface detected and mapped in the water pool.

While traversing the water pool, optionally after traversing the entire pool, and mapping all its geometrically distinguishable surfaces, a map of the water pool may be generated and output for navigating one or more dynamic pool equipment units in the water pool during execution of one or more dynamic activity, tasks, operations, missions, and/or the like, collectively designated activities, for example, pool cleaning, maintenance, water purification, and/or the like.

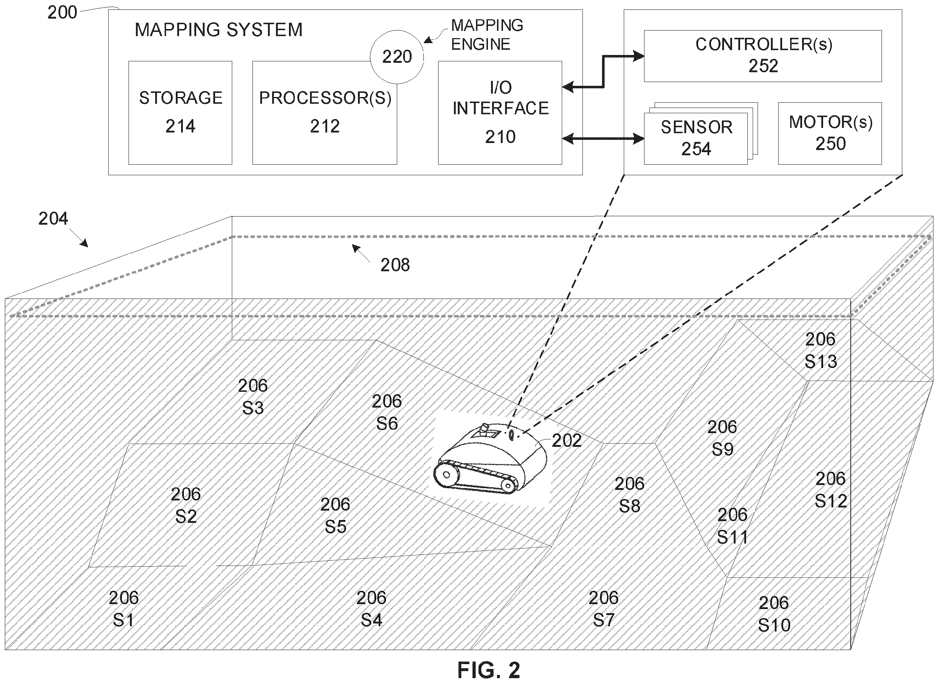

Reference is also made to FIG. 2, which is a schematic illustration of an exemplary system for mapping of a water pool explored by a dynamic pool equipment unit based on analysis of sensory data captured by a plurality of sensors employing a plurality of sensing technologies, according to some embodiments of the present invention.

An exemplary mapping system 200 may be deployed to map a body of water, specifically manmade (artificial) body of water such as, for example, a pool, a swimming pool, jacuzzi, a water reservoir, a fountain and/or the like designated water pool 204 herein after in order to create a map of the water pool which may be used to navigate in it.

The mapping system 200 may map the water pool 204 based on analysis of sensory data captured by a plurality of sensors 254 of a pool equipment unit 202, in particular a mobile pool equipment unit 202, for example, a pool robot, a pool cleaning robot, a pool maintenance robot, a water treatment system, and/or the like operated to explore the water pool 204.

The pool equipment unit 202 may comprise one or more electric motors 250, for example, a self-commutated motor, an external commutated motor, a synchronous motor, an asynchronous motor and/or the like controllable by one or more controllers 252 of the pool equipment unit 202.

Optionally, one or more of the electric motor(s) 250 of the pool equipment unit 202 may be servomotors which are position controlled with a feedback system as known in the art. In another example, one or more of the electric motor(s) 250 of the pool equipment unit 202 may be step motors which divides a movement range, for example, rotation into a number of equal steps. As known in the art, the electric motor(s) 250 may be operated by driving them with power, for example, voltage, current and/or the like, typically using PWM generated by one or more power supplies of the pool equipment unit 202 and/or received from an external power supply via one or more power cables connecting to the pool equipment unit 202.

The pool equipment unit 202 may be equipped with advancing means, for example, wheels, tracks, a combination thereof, and/or the like coupled and operated by the electric motor(s) 250 for moving and/or advancing the pool equipment unit 202 in one or more directions, for example, forward, backward, upward, sideways, rotation, and/or the like.

For example, the pool equipment unit 202 may comprise two or more tracks arranged at two opposite sides of the pool equipment unit 202 which may be rotated by one or more driving wheels spun by one or more of the electric motor of the pool equipment unit 202. In such case, one or more motors 250 may be operated to spin the driving wheel of both tracks to move the pool equipment unit 202 forward and/or backward, spin only one of the tracks thus causing the pool equipment unit 202 to rotate around its axis, spin the driving wheel of one of the tracks in one direction while spinning the driving wheel of the other track in the opposite direction thus causing the pool equipment unit 202 to rotate around its axis in higher speed, and/or the like.

The sensors 254 may employ a plurality of different sensing technologies, for example, pressure sensing, motion sensing (e.g., gyroscope, accelerometer, odometer, speedometer, IMU, Hall effect sensor, etc.), magnetism sensing, imaging (image sensor, LiDAR, SONAR, etc.), proximity sensing, and/or the like. One or more of the sensors 254, specifically motion sensors may be deployed and adapted accordingly to measure motion parameters of the pool equipment unit 202, for example, orientation (e.g., tilt, yaw, roll, north pole), movement (e.g., acceleration, speed, angular velocity, etc.), and/or the like. One or more other sensors 254, specifically imaging sensors may be deployed and adapted accordingly to capture imagery data, range data, and/or the like relating and/or depicting the external environment of the pool equipment unit 202, i.e., at least part of the water pool 204.

In particular, the plurality of sensors 254 may typically comprise low-end, low cost sensors which may capture sensory data that when analyzed jointly may enable efficient, high accuracy, and reliable mapping of the water pool 204 thus eliminating the need for high-end, highly accurate sensors such as, for example, a SONAR, which may increase cost, and/or complexity of deployment, operation, and/or analysis of their captured sensory data. Additionally or alternatively, in some embodiments the sensors 254 may comprise one or more SONARs that may be utilized for mapping the water pool 204 in accordance with the disclosed subject matter, such as described further herein.

The mapping system 200, for example, a controller, a computer, a control unit, and/or the like may include an Input/Output (I/O) interface 210, a processor(s) 212, and a storage 214 adapted for storing data and/or computer program code (program store).

The I/O interface 210 may include one or more wired and/or wireless I/O interfaces, ports and/or interconnections, for example, a Universal Serial Bus (USB) port, a serial port, a Bluetooth (BT) interface, a Radio Frequency (RF) interface, Wireless Local Area Network (WLAN, e.g. Wi-Fi), ultra sonic communication, LIFI, and/or the like. Via the I/O interface 210, the mapping system 200 may communicate with one or more external devices.

For example, via the I/O interface 210, the mapping system 200 may connect to one or more of the sensors 254 to receive sensory data captured while the pool equipment unit 202 explores the water pool 204. In another example, via the I/O interface 210, the mapping system 200 may connect to one or more of the controller(s) 252 to receive sensory data delivered by one or more sensors 254 to one or more of the controller(s) 252. Moreover, via the I/O interface 210, the mapping system 200 may transmit the map it generated for the water pool 204 to the controller(s) 252 which may use the map to navigate in the water pool 204.

The I/O interface 210 may optionally include one or more wired and/or wireless network interfaces for connecting to an external network comprising one or more wired and/or wireless networks, for example, a Local Area Network (LAN), a WLAN (e.g. Wi-Fi), a Wide Area Network (WAN), a Metropolitan Area Network (MAN), a cellular network, the internet and/or the like. The mapping system 200 may therefore communicate, over the network, with one or more remote network resources, for example, a server, a storage server, a cloud service, and/or the like.

For example, the mapping system 200 may transmit the map is generated for the water pool 204 to one or more other pool equipment units deployed to conduct one or more activities, tasks, missions, and/or operations in the water pool 204 and/or in similar water pools having common geometry, i.e., similar layout, structure, and configuration. In another example, the mapping system 200 may upload the map of the water pool 204 to one or more services, databases, and/or platforms from which one or more other pool equipment units may download it while conducting one or more activities, tasks, missions, and/or operations in the water pool 204 and/or in similar water pools.

The processor(s) 212, homogenous or heterogeneous, may include one or more processing nodes arranged for parallel processing, as clusters and/or as one or more multi core processor(s). The storage 214 may include one or more non-transitory memory devices, either persistent non-volatile devices, for example, a ROM, a Flash array, a hard drive, an SSD, and/or the like as well as one or more volatile devices, for example, a RAM device, a cache memory and/or the like.

The processor(s) 212 may execute one or more software modules, for example, a process, a script, an application, an agent, a utility, a tool, an Operating System (OS), a service, a plug-in, an add-on and/or the like each comprising a plurality of program instructions stored in a non-transitory medium (program store) such as the storage 214 and executed by one or more processors such as the processor(s) 212. Optionally, the processor(s) 212 may include, utilize and/or apply one or more hardware elements available in the slipperiness evaluation system 200, for example, a circuit, a component, an Integrated Circuit (IC), an ASIC, an FPGA, a Digital Signals Processor (DSP), a Graphic Processing Unit (GPU), and/or the like.

The processor(s) 212 may therefore execute one or more functional modules utilized by one or more software modules, one or more of the hardware modules and/or a combination thereof. For example, the processor(s) 212 may execute a mapping engine 220 configured to execute the process 100 for generating a map of the water pool 204 by mapping all geometrically distinguishable surfaces (nodes) according to sensory data captured by the sensors 254 of the dynamic pool equipment unit 202 while traversing the water pool 204. It should be noted that the steps of the process 100 executed by the mapping system 200, specifically by the mapping engine 220, may be executed by any of one or more processors of the processor(s) 212 such that any one of the processors of the processor(s) 212 may execute the process 100 and/or part thereof or optionally not participate in execution of the process 100.

As illustrated in FIG. 2, the mapping system 200 may be separate from the controller(s) 252 operating the pool equipment unit 202. For example, the mapping system 200 may be deployed within the pool equipment unit 202 as an at least partially independent unit which may be connected to one or more other circuits, units, modules, and/or components of the pool equipment unit 202. In such embodiments, the independent mapping system 200 may receive power from one or more power supply circuits, units, and/or modules of the pool equipment unit 202. As described herein before, the independent mapping system 200, specifically the mapping engine 220 may further communicate and exchange data, via the I/O interface 210, with one or more other components of the pool equipment unit 202, for example, the sensor(s) 254, the controller(s) 252, and/or the electric motor(s) 250.

However, in some embodiments, the mapping system 200 may be integrated in one or more of the units, modules, and/or components of the pool equipment unit 202 which may execute the mapping engine 220. For example, the mapping system 200 may be executed utilized by one or more of the controller(s) 252 of the pool equipment unit 202, such that the controller(s) 252 may execute the mapping engine 220.

Optionally, while non-typical, the mapping system 200, specifically, the mapping engine 220 may be utilized by one or more remote systems, for example, a server, a computing node, a cluster of computing nodes, and/or the like which are communicatively coupled to the pool equipment unit 202 via one or more networks, for example, LAN, WLAN, WAN, MAN, cellular network, the internet and/or the like, specifically high-speed networks. The remote mapping system 200 may therefore communicate with the pool equipment unit 202 to receive the sensory data captured by its sensors 254 and enable the remote mapping engine 220 to execute the process 100 for generating the map of the water pool 204.

More optionally, the mapping system 200, specifically, the mapping engine 220 may be utilized by one or more cloud computing services, platforms and/or infrastructures such as, for example, Infrastructure as a Service (IaaS), Platform as a Service (PaaS), Software as a Service (SaaS) and/or the like provided by one or more vendors, for example, Google Cloud, Microsoft Azure, Amazon Web Service (AWS) and Elastic Compute Cloud (EC2), IBM Cloud, and/or the like that may communicate with the pool equipment unit 202 via one or more networks to receive the captured sensory data and for generating the map of the water pool 204.

As shown at 102, the process 100 starts with operating a dynamic pool equipment unit 202 deployed in a water pool 204 to explore the water pool 204.

In order to effectively operate the dynamic pool equipment unit 202 to explore the entire water pool 204, the pool equipment unit 202 may be operated according to sensory data captured by a plurality of sensors 254 adapted to monitor movement and/or surroundings of the pool equipment unit 202.

Operating the pool equipment unit 202 may be therefore an iterative process in which while the pool equipment unit 202 is operated to move to some location in the water pool 204, sensory data recording its movement and/or surroundings is analyzed to map the water pool 204, as described in detail herein after, and the pool equipment unit 202 may be operated according to the analysis to further explore the water pool 204.

Operating the pool equipment unit 202 to explore the water pool 204 may be done, for example, by the mapping engine 220 which is adapted and executed to map the water pool 204. In such embodiments, the mapping engine 220 may output, transmit, and/or otherwise deliver movement instructions to one or more of the controller(s) 252 to operate the motor(s) 250, and/or the advancing means of the pool equipment unit 202. However, in some embodiments, the pool equipment unit 202 may be operated by the one or more of the controller(s) 252 independently with no intervention of the mapping engine 220.

As shown at 104, the mapping engine 220 may receive sensory data captured by the plurality of sensors 254 deployed at the pool equipment unit 202 which as described herein before may employ a plurality of different sensing technologies.

For example, the sensors 254 may include one or more pressure sensors employing pressure sensing. In another example, the sensors 254 may include one or more motion sensors, for example, a gyroscope, an accelerometer, a speedometer, an odometer, an IMU, a magnetometer, a Hall effect sensor, and/or the like employing one or more movement, direction and/or orientation sensing technologies. In another example, the sensors 254 may include one or more image sensors employing one or more imaging technologies, for example, visible light imaging (e.g. camera, etc.), Infrared (IR) imaging, thermal imaging, LiDAR, SONAR, and/or the like. In another example, the sensors 254 may include one or more proximity sensors employing one or more proximity sensing technologies, for example, Hall effect, ultrasonic sensing, magnetic sensing, inductive sensing, conductive sensing, and/or the like.

The sensory data received from each sensor 254 may therefore depend on the sensing technology of the respective sensor 254.

For example, the sensory data received from one or more pressure sensors 254 may include pressure measurements (values) indicative of the pressure applied on the pool equipment unit 202.

In another example, the sensory data received from one or more motion sensors 254 may include measurements (values) of orientation of the pool equipment unit 202, for example, tilt, yaw, roll, and/or the like. In another example, the sensory data received from one or more motion sensors 254, for example, a magnetometer may include measurements (values) of absolute orientation of the pool equipment unit 202 with respect to the north pole. In another example, the sensory data received from one or more of the motion sensors 254 may include measurements (values) of movement of the pool equipment unit 202, for example, speed, acceleration, deceleration, angular velocity, and/or the like. In another example, the sensory data received from one or more of the motion sensors 254 may include distance travelled by the pool equipment unit 202.

In another example, the sensory data received from one or more imaging sensors 254, for example, a camera, a video camera, an IR camera, and/or the like deployed to monitor the (external) environment of the pool equipment unit 202, may include imagery data, for example, image(s), frame sequence(s), video stream(s), and/or the like depicting at least part of the water pool 204. In another example, the sensory data received from one or more imaging sensors 254, for example, a LiDAR sensor, a SONAR sensor, a thermal sensor, and/or the like also deployed to monitor the external environment of the pool equipment unit 202, may include one or more range maps, thermal maps, and/or the like of at least part of the water pool 204.

As shown at 106, the mapping engine 220 may analyze the sensory data captured by the plurality of sensors 254 to identify, for example, extract, compute, derive, and/or determine one or more features, for example, attributes, characteristics, parameters, and/or the like of the water pool 204.

Specifically, based on analysis of the sensory data, the mapping engine 220 may identify, compute, derive, and/or determine one or more structural, and/or geometrical features of the water pool 204, for example, location, dimensions, depth, slope and/or the like of a plurality of surfaces in the water pool 204.

For example, the mapping engine 220 may analyze pressure measurements (values) measured by one or more pressure sensors 254 which are indicative of the pressure applied on the pool equipment unit 202. The mapping engine 220 may therefore map the depth of the water pool 204 based on the depth of the pool equipment unit at its present and identify depth features of the water pool 204. For example, based on analysis of the mapped depth data the mapping engine 220 may identify multiple different surfaces having different depths.

In another example, the mapping engine 220 may analyze motion measurements (values) measured by one or more motion sensors 254 to compute, derive, and/or determine one or more motion parameters of the pool equipment unit 202, for example, movement, distance, relative orientation, absolute orientation with respect to north pole, and/or the like. Based on analysis of the motion parameters, the mapping engine 220 may determine movement of the pool equipment unit 202, for example, a distance travelled by the pool equipment unit 202, a direction of movement, an angle of movement (e.g., ascending, descending, etc.), and/or the like.

The mapping engine 220 may then identify and map one or more features of the water pool 204 based on the determined movement of the pool equipment unit 202. For example, based on analysis of orientation of the pool equipment unit 202 derived from sensory data captured by one or more of the motion sensors 254, for example, a gyroscope, and/or the like, the mapping engine 220 may identify multiple different surfaces having different slopes. In another example, based on analysis of the movement of the pool equipment unit 202 derived from sensory data captured by one or more of the motion sensors 254, for example, an accelerometer, a speedometer, an odometer, an IMU, and/or the like, the mapping engine 220 may compute a length of a certain flat surfaces between two walls, and/or between two or more other surfaces having different slopes, and/or the like. In another example, based on analysis of the movement of the pool equipment unit 202 derived from sensory data captured by one or more of the motion sensors 254, for example, a magnetometer, a gyroscope, and/or the like, the mapping engine 220 may compute a relative and/or absolute direction and thus layout of one or more surfaces in the water pool 204.

In another example, the mapping engine 220 may analyze imagery data captured by one or more image sensors 254 to identify one or more features of the water pool 204. For example, based on analysis of one or more images captured by one or more image sensors 254 (e.g., camera, IR camera, thermal camera, etc.), the mapping engine 220 may identify one or more surfaces, for example, a wall, a floor, a sloped surface, and/or the like having different slope angles and/or located at different locations in the water pool 204. In another example, based on analysis of one or more range maps generated based on data captured by one or more ranging sensors 254 (e.g., LiDAR, SONAR, etc.), the mapping engine 220 may identify one or more surfaces, for example, a wall, a floor, a sloped surface, and/or the like having different slope angles and/or located at different locations in the water pool 204.

In another example, the mapping engine 220 may analyze proximity measurements (values) measured by one or more proximity sensors 254 to identify one or more features of the water pool 204. For example, the mapping engine 220 may identify a first wall in close proximity to the pool equipment unit 202 at a first time when the pool equipment unit 202 is located at a first location in the water pool 204. The mapping engine 220 may further identify a second wall in close proximity to the pool equipment unit 202 at a second time when the pool equipment unit 202 is located at a second location in the water pool 204. Based on the identified first and second walls, the mapping engine 220 may map one or more surfaces travelled by the pool equipment unit 202 between the first and second locations.

In particular, the mapping engine 220 may merge the sensory data captured by the plurality of sensors 254 employing different sense technologies and analyze the joint sensory data to identify the structural and geometrical features of the water pool 204. As such, the mapping engine 220 may compensate for inaccuracies and/or limitations in the measurements and/or data captured by any single sensor 254 and/or any single type of sensor 254 employing a certain sense technology.

For example, the mapping engine 220 may jointly analyze motion data captured by one or more motion sensors 254 and imagery data captured by one or more image sensors 254 to identify one or more structural and geometrical features of the water pool 204. In another example, the mapping engine 220 may jointly analyze proximity data captured by one or more proximity sensors 254 and ranging data captured by one or more ranging sensors 254 to identify one or more structural and geometrical features of the water pool 204

As shown at 108, based on the structural and geometrical features of the water pool 204, the mapping engine 220 may map one or more geometrically distinguishable surfaces 206 of the water pool 204 which are geometrically distinguishable from any adjacent surface of the water pool 204.

Each geometrically distinguishable surface 206, interchangeably designated node, may be geometrically distinguishable from its adjacent surfaces (nodes) 206 by one or more geometric attributes, for example, a different depth, a different slope, and/or the like.

Obviously, multiple surfaces (nodes) 206 located at different locations in the water pool 204 may be geometrically distinguishable from each other even if they have identical depth and/or slope. As such each of the nodes 206 may be distinguished from other nodes by its depth, slope, and/or location.

Walls of the water pool 204 which may be vertical and/or slopped, which in order to avoid clutter and in-clarity are not designated in the exemplary water pool 204 with specific designations, may be also mapped by the mapping engine 220 as surfaces 206. Additionally, the mapping engine 220 may map one or more other surfaces identified in one or more water pools such as the water pool 204, for example, steps, stairs, and/or the like.

For example, based on analysis of the structural and geometrical features of the exemplary water pool 204, the mapping engine 220 may map a plurality of geometrically distinguishable surfaces 206, for example, surfaces S1, S2, S3, S4, S5, S6, S7, S8, S9, S10, S11, S12, and S13 which are each geometrically distinguishable from its adjacent surfaces 206 by at its depth and/or slope. The surface 206 S6, for example, is geometrically distinguishable from its adjacent surfaces 206 S3, S5, and S8 by their slopes having different angles. The surface 206 S6 may be also geometrically distinguishable from the rear wall of the water pool 204 which is vertical by their different angle slopes.

In another example, assuming the surface 206 S12 is vertical (90 degree slope) the surface 206 S13 is geometrically distinguishable from its adjacent surfaces 206 S10 by their different depths.

In another example, while the depth and slope of two surfaces 206, for example, surfaces 206 S1 and S10, may be identical, the two surfaces (nodes) 206 S1 and S10 are obviously geometrically distinguishable from each other as they are located at different locations in the water pool 204 and are not directly adjacent to each other.

Optionally, the mapping engine 220 may map one or more geometrically distinguishable surfaces 206 according and/or with respect to positioning of one or more fixed elements identified in the water pool 204, for example, a lamp, a ladder, a jet, a skimmer, a drain opening, a marking (painted, carved, engraved, etc.), and/or the like which are statically fixed and typically unmovable in the water pool 204.

The fixed elements may be identified in the water pool 204 based on the analysis of the sensory data captured by one or more of the sensors 254. For example, imagery data such as, for example, an image, a frame, a video stream, an IR image, a thermal image, and/or the like captured by one or more image sensors 254 may be analyzed using one or more computer vision, and/or image processing algorithms as known in the art to identify one or more fixed elements. In another example, ranging map such as, for example, a ranging map, and/or the like generated based on ranging data captured by one or more range sensors 254 (e.g., LiDAR, SONAR, etc.) may be analyzed using one or more methods and/or algorithms as known in the art to identify one or more fixed elements.

The mapping engine 220 may therefore map one or more of the geometrically distinguishable surfaces 206 according to the positioning, for example, location, distance, view angle, orientation, and/or the like of one or more identified fixed elements, in particular, with respect to the geometrically distinguishable surfaces 206. For example, a location of a certain geometrically distinguishable surface 206 may be mapped according to the positioning, for example, a location and a distance of a certain ladder identified in the water pool 204. In another example, a location and optionally a slope of another geometrically distinguishable surface 206 may be mapped according to the positioning, for example, a location, a distance, and a view angle of a certain light lamp which is installed in a wall of the water pool 204. In another example, the mapping engine 220 may compute one or more spatial features, for example, a distance, a location, an orientation, and/or the like between two or more identified fixed elements. The mapping engine 220 may then map one or more geometrically distinguishable surface 206 based on the respective spatial relation between multiple identified fixed elements. Mapping multiple identified fixed elements may significantly improve mapping of geometrically distinguishable surface 206 even in the presence of measurement errors to any single fixed element.

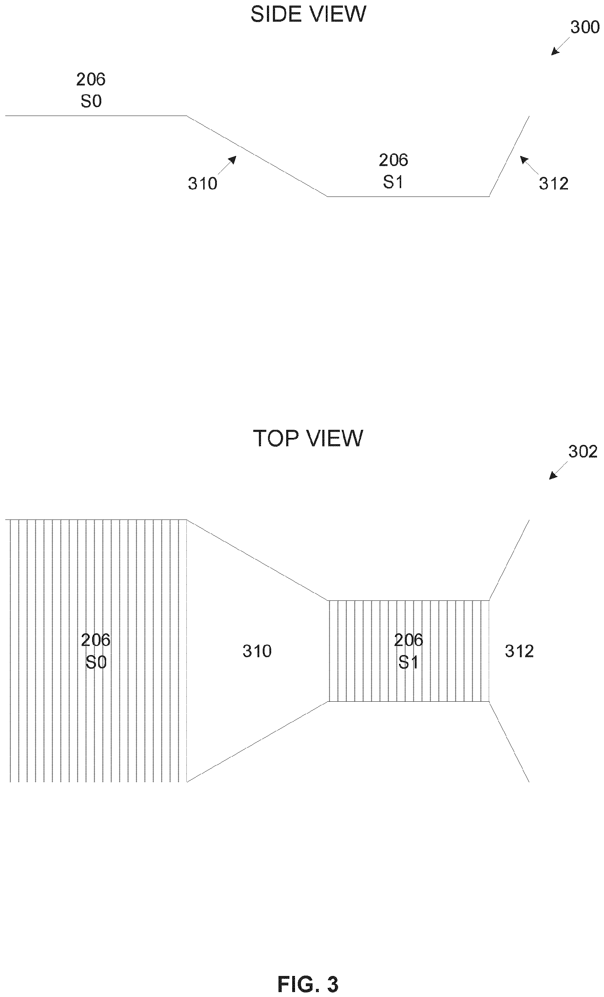

Reference is now made to FIG. 3, which is a schematic illustration of an exemplary water pool mapped based on analysis if a plurality of sensors employing a plurality of sensing technologies, according to some embodiments of the present invention.

Illustration 300 shows a side view of part of an exemplary water pool such as the water pool 204 while illustration 302 is a top view of the same part of the water pool.

A mapping engine such as the mapping engine 220 may map a first geometrically distinguishable surface (node) 206 S0 and a second geometrically distinguishable surface (node) 206 S1 which, while having similar slopes, have different depths and are therefore geometrically distinguishable from each other.

Moreover, as described herein before, the mapping engine 220 may also map the surfaces 310 and/or 312 as geometrically distinguishable surfaces (nodes) 206 since they are geometrically distinguishable from their adjacent surfaces 206 by their different slopes. For example, the surface 310 which is a slopped surface may be geometrically distinguishable from the surface 206 S0 and the surface 206 S1 which are flat, and the surface 312 which is also slopped may be geometrically distinguishable from the flat surface 206 S1.

Reference is made once again to FIG. 1.

As shown at 110, the mapping engine 220 may generate a map and/or a model, collectively designated map, of the water pool 204 based on the geometrically distinguishable surfaces 206 detected and mapped in the water pool 204.

The map generated by the mapping engine 220 for the water pool 204 may describe the structural arrangement, layout, and/or view of the water pool 204 including the geometrically distinguishable surfaces 206 mapped in the water pool 204 and optionally further comprising one or more other elements such, as for example, one or more of the fixed elements.

The map of the water pool 204 may comprise one or more two dimension (2D) and/or three dimension (3D) maps, for example, a line drawing, a topographic map, an image overlay, and/or a combination thereof.

As shown at 112, the process 100 may be an iterative process in which the pool equipment unit 202 may be operated to explore the water pool 204 in order to detect and map one or more geometrically distinguishable surfaces (nodes) 206 in the water pool 204.

The process 100 may be therefore repeated in a plurality of iterations until the entire water pool 204 is mapped, i.e., all geometrically distinguishable surfaces (nodes) 206 of the water pool are mapped by the mapping engine 220. During each iteration, the mapping engine 220 may update the map of the water pool 204 such that during the iterative process 100 while the pool equipment unit 202 further traverses and explores the water pool 204, the pool equipment unit 202 may gradually update the map according to one or more additionally detected geometrically distinguishable surfaces 206.

In order to effectively, accurately, quickly, and/or reliably map the surfaces (nodes) 206 of the water pool 204, the pool equipment unit 202 may be operated in the water pool 204 according to one or more movement and/or exploration patterns, methods, and/or algorithms.

For example, the pool equipment unit 202 may be operated according to a highest (shallowest) point exploration algorithm in which the pool equipment unit 202 may be operated to explore the water pool 204 starting from a random start point to search for one or more local highest points of the water pool 204 which may be mapped as a respective highest surfaces (nodes) 206. For example, assuming the pool equipment unit 202 is initially located at surface 206 S7 from where it is operated to start exploring the water pool 204. In such case, based on analysis of the sensory data captured by the sensors 254 of the pool equipment unit 202, the mapping engine 220 may map the surface 206 S7, and operate the pool equipment unit 202 accordingly to move to the surface 206 S8, and from the surface 206 S8 to the surface 206 S9 and eventually to the surface 206 S13 which may be identified by the mapping engine 220 as a highest node (surface) 206 in the water pool 204, or at least a local highest node 206.

In another example, the pool equipment unit 202 may be operated according to a lowest (deepest) point exploration algorithm in which the pool equipment unit 202 may be operated to explore the water pool 204 starting from a random start point to search for one or more local deepest points of the water pool 204 which may be mapped as a respective lowest surfaces (nodes) 206. For example, assuming the pool equipment unit 202 is initially located at surface 206 S3 from where it is operated to start exploring the water pool 204. In such case, based on analysis of the sensory data captured by the sensors 254 of the pool equipment unit 202, the mapping engine 220 may map the surface 206 S3, and operate the pool equipment unit 202 accordingly to move to the surface 206 S2, and from the surface 206 S2 to the surface 206 S1 which may be identified by the mapping engine 220 as a lowest node (surface) 206 in the water pool 204, or at least a local lowest node 206.

In another example, the pool equipment unit 202 is operated according to a multi-direction exploration algorithm in which the pool equipment unit 202 may be operated to move in a plurality of directions from each mapped distinguishable surface (node) 206 in order to detect one or more adjacent surfaces (nodes) 206. For example, the pool equipment unit 202 may be operated to move from a center of a surface (node) 206 in a plurality of directions equally spaced from each other, for example, four directions (90 degrees from each other), eight directions (45 degrees from each other), and/or the like.

For example, assuming the pool equipment unit 202 is located at the surface (node) 206 S5 which is mapped accordingly buy the mapping engine 220. In such case, the pool equipment unit 202 may be operated to move in four directions such that it may first move in a first direction to the surface 206 S4 which may be mapped by the mapping engine 220. The pool equipment unit 202 may be then operated to move back to the surface 206 S5 and then move in a second direction to the surface 206 S2 which may be also mapped by the mapping engine 220. The pool equipment unit 202 may be then operated to move back to the surface 206 S5 and then move in a third direction to the surface 206 S6 which may be also mapped by the mapping engine 220. The pool equipment unit 202 may be then operated to move back to the surface 206 S5 and then move in a fourth direction to the surface 206 S8 which may be also mapped by the mapping engine 220.

Optionally, the mapping engine 220 may generate the map for the water pool 204 after traversing the entire water pool 204 and mapping all the geometrically distinguishable surfaces 206 detected in the water pool.

The map of the water pool 204 may comprise one or more two dimension (2D) and/or three dimension (3D) maps, for example, a line drawing, a topographic map, an image overlay, and/or a combination thereof.

As shown at 114, the mapping engine 220 may output the map of the water pool 204 which may be used for navigating one or more dynamic pool equipment units such as the pool equipment unit 202 in the water pool 204 during execution of one or more dynamic activities (task, operation, mission, etc.) in the water pool 204, for example, cleaning, maintenance, water purification, and/or the like.

For example, the mapping engine 220 may locally store the map in the pool equipment unit 202, for example, the storage 214 and/or a storage used by the controller(s) 252 such that the map may be used to navigate the pool equipment unit 202 during one or more activities in the water pool 204 and/or in similar water pools 204 having the same structure and geometrical features. In another example, the mapping engine 220 may transmit the map to one or more other dynamic pool equipment units such as the pool equipment unit 202 deployed to conduct one or more of the dynamic activities in the water pool 204 and/or similar water pools 204. In another example, the mapping engine 220 may transmit the map to one or more storage resources, for example, a database, a storage server, a cloud service, and/or the like from which the map may be retrieved and used for navigating one or more dynamic pool equipment units deployed to conduct one or more of the dynamic activities in the water pool 204 and/or similar water pools 204.

In some embodiments, sensory data of motion, pressure, electric properties, and/or the like, as may be obtained from one or more of the sensors 254, such as for example, a gyroscope, accelerometer, inertial measurement unit (IMU), pressure sensor, magnetometer, drive motor current, drive motor speed, impeller motor current, impeller motor speed, capacitive sensor, inductive sensor, and/or any combinations thereof, may be utilized by the mapping engine 220 for detection of a water line such as 208 of the water pool 204. It will be appreciated that the values measured by such sensors may oscillate differently, be higher and/or lower, and/or exhibit other abnormalities that may optionally be detected using analytical, statistical, machine learning (ML) and/or artificial intelligence methods and/or the like, when an edge of a wall surface of the water pool 204 is reached by the pool equipment unit 202.

For example, in case of using sensory data from a gyroscope, accelerometer, and/or the like, when the pool equipment unit 202 reaches the water line 208, there may be detected by mapping engine 220 changes in an accelerometer mainly in the movement direction (X), which is the direction toward which the pool equipment unit 202 is faced forward (now looking up). The accelerometer measurement along axis X (and also measurements along axes Y,Z may optionally be similarly affected too) may oscillate in a specific pattern that fits to a water line and not to a regular climb, thus, it may be determined accordingly by the mapping engine 220 that the pool equipment unit 202 has finished its climbing and now is at the water line 208. Similarly, in a gyroscope, axes can also be similarly affected by these oscillations and create a specific pattern for the water line 208. Similarly yet, other measurements such as impeller current and/or speed may also exhibit likewise detectable affect.

In another example, in case of employing a pressure sensor, the barometric pressure may be previously known such that when the pool equipment unit 202 arrives at a location and/or altitude where the measurement reaches close to it, or alternatively when a constant pressure is read for a predetermined time interval, e.g., over X seconds and/or the like, then it may be determined by the mapping engine 220 that the pool equipment unit 202 has reached the water line 208.

In another example, in case of employing a drive motor current sensor included in the sensors 254, a change in current as compared to measurement thereof during a time in which the pool equipment unit 202 was climbing, may similarly be detected and used by the mapping engine 220 to determine that the pool equipment unit 202 reached the water line 208.

In another example, in case of employing a capacitive sensor and/or the like included in the sensors 254, then while the pool equipment unit 202 is climbing vertically on the wall of the water pool 204 a different capacitance may be sensed and similarly trigger detection of the water line 208 by the mapping engine 220. It will be appreciated that a determination that the pool equipment unit 202 is climbing vertically on the wall of the water pool 204 may be made using motion sensory data, e.g., by an accelerometer, gyroscope, and/or the like, or any combination thereof.

In some embodiments, sensory data from the sensors 254 including motion data, and additionally pressure sensor data and/or magnetometer data, may be utilized in detection of a sun ledge, i.e., a shallow shelf in a water pool elevated above its floor. For example, a surface such as 206 S0 in FIG. 3 when submerged in shallow water may be considered as a sun ledge of the water pool illustrated by 300.

Determination of whether a sun ledge is present or not may be performed as follows. Upon initiation of a climbing of the pool equipment unit 202 on a wall surface of the water pool 204, which may optionally turn out to be a wall that connects at its top end to a sun ledge, a determination may be made by the mapping engine 220 that the pool equipment unit 202 is positioned vertically, namely, its wheels and/or drive belt moving on the wall are at a vertical orientation. Then, in case that the sensors 254 of the pool equipment unit 202 include a pressure sensor, the mapping engine 220 may use it to measure pressure and store the measured pressure value as a reference value "P-floor". Similarly, in case that the sensors 254 of the pool equipment unit 202 include a magnetometer, the mapping engine 220 may use it to obtain a measured reference value "Mag-floor" and store the last value of the direction, so that in case a sun ledge is detected then the direction thereof may be retrieved from the storage 214.

Subsequently, the pool equipment unit 202 may start moving up and climb the wall surface until it reaches to the tip of the sun ledge where it gets horizontal again. In case that the sensors 254 include a pressure sensor, the pressure may be measured at that location and compared with the stored value of P-floor. If the current pressure value exceeds the P-floor value by more than a predetermined value, e.g., 30mbar and/or the like, then the mapping engine 220 may conclude that the pool equipment unit 202 is on a sun ledge, otherwise the mapping engine 220 may determine that the pool equipment unit 202 just climbed a wall and got on the floor again from some reason.

In case that a pressure sensor is not included in the sensors 254, then the mapping engine 220 may determine that the pool equipment unit 202 potentially reached and is on a sun ledge, as it gone horizontal after a time period in which it may have possibly been climbing.

Then, the pool equipment unit 202 may drive back and if there is detected via motion sensors of the sensors 254, such as a gyroscope, an accelerometer, and/or the like, that a hard change of pitch of the pool equipment unit 202 has occurred, namely its nose gets suddenly tilted relative to its tail at sharp angle, then if the hard change of pitch occurred after a predetermined time period has elapsed, e.g., X seconds and/or the like, the pool equipment unit 202 drives forward again and the mapping engine 220 may accordingly determine that the pool equipment unit 202 is on a sun ledge. The pool equipment unit 202 may then progress in a similar manner along the sun ledge, driving forward, getting to a wall, and driving back with a slight angle until "almost" falling down again.

In case that the sensors 254 include a pressure sensor, the pressure at that location may be sensed against a pre-stored value of the barometric pressure in the air "P-baro" as previously measured. In case that the sensors 254 include a magnetometer, then the stored "Mag-floor" value is taken by the mapping engine 220 as a direction of the sun ledge.

Otherwise, in case that no change in pitch is detected, the mapping engine 220 may accordingly determine that the pool equipment unit 202 is not on a sun ledge.

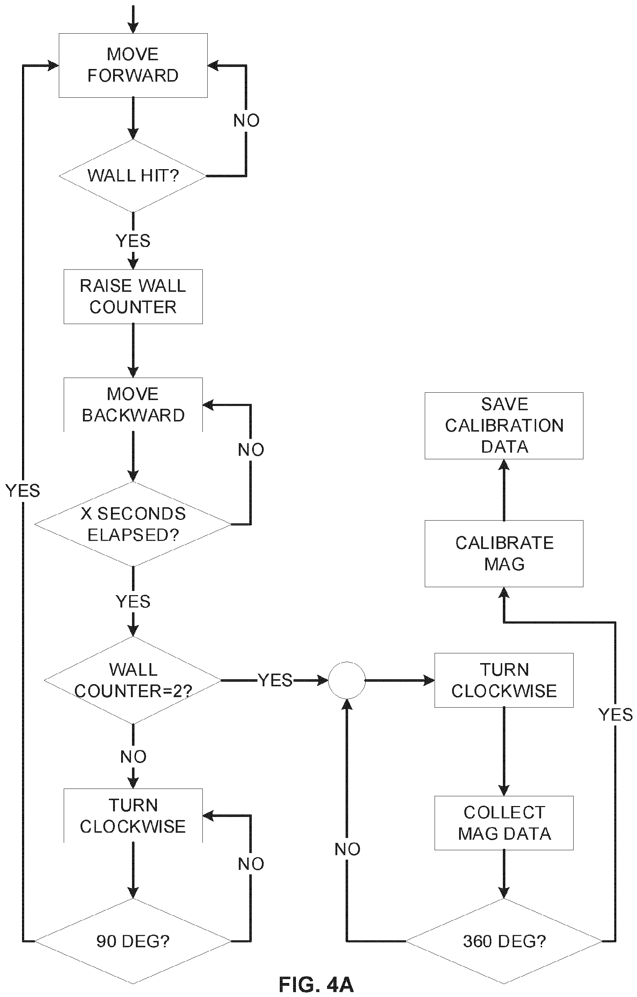

Reference is now made to FIG. 4A which is a flowchart schematically representing an optional flow of operations for magnetometer calibration that may be utilized in mapping of a water pool explored by a dynamic pool equipment unit, according to some embodiments.

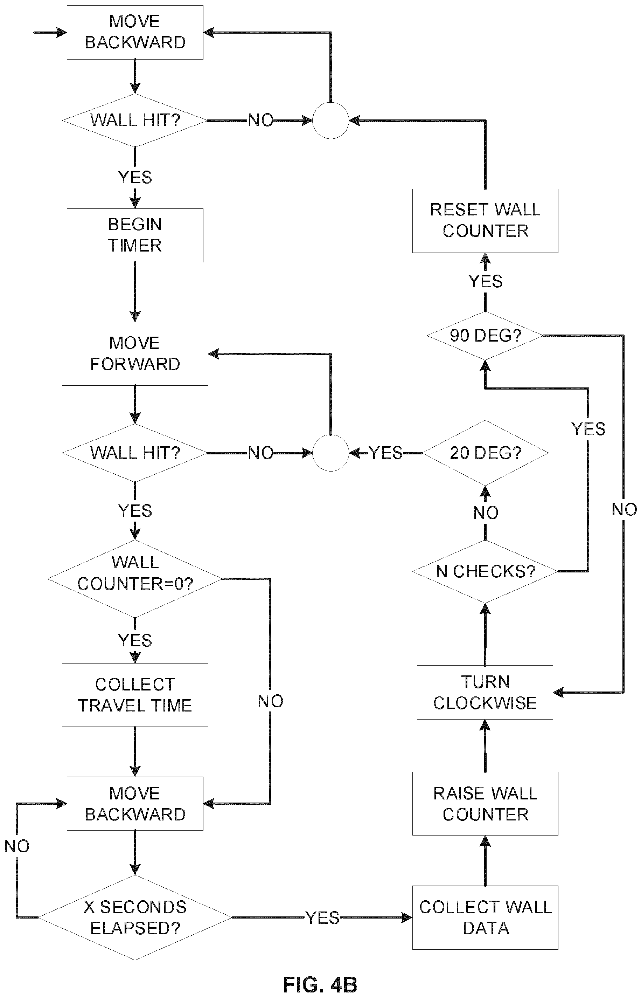

Reference is also made to FIG. 4B which is a flowchart schematically representing an optional flow of operations for pool setup that may be utilized in mapping of a water pool explored by a dynamic pool equipment unit, according to some embodiments.

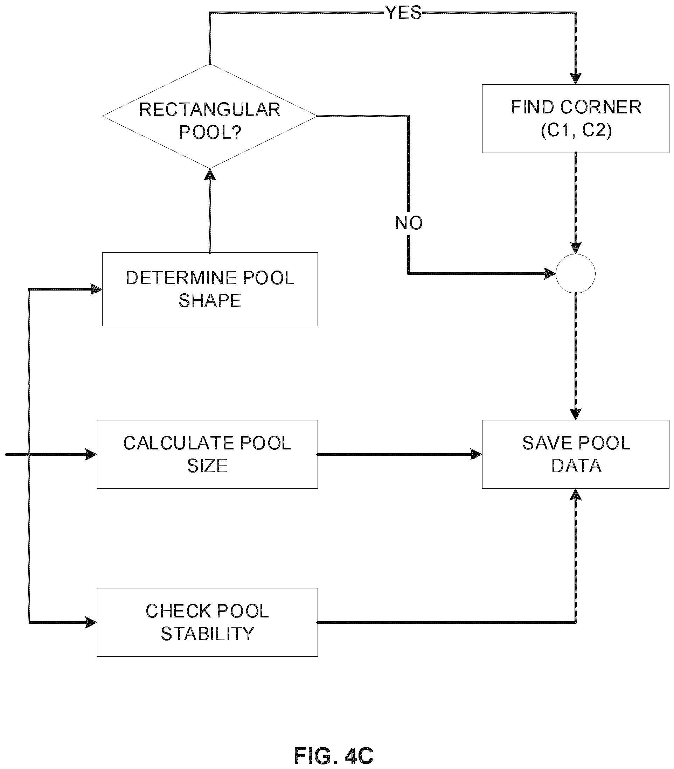

Reference is yet also made to FIG. 4C which is a flowchart schematically representing an optional flow of operations for pool setup post-processing that may be utilized in mapping of a water pool explored by a dynamic pool equipment unit, according to some embodiments.

As illustrated in FIGS. 4A, 4B, and 4C, the pool equipment unit 202 may perform an exploratory scan of a water pool such as 204 in which the pool equipment unit 202 traverses the pool in a predetermined scanning pattern, e.g. a maze-like scan pattern including semi-random hitting of the pool equipment unit 202 at the walls of the water pool 204 and turning to different directions after getting back from the hit wall, each time to different direction and with different driving time to introduce randomness at sufficient level to cover the entirety of the pool 204 regardless of its particular geometry and/or any other likewise special or regular scan. The pool equipment unit 202 may hit the walls of the water pool 204 for a few times, to detect an average distance of the walls from each other and also an angle between them, that way an estimated pool size and estimated shape may be determined by the mapping engine 220.

For example, if most or all angles between walls are in harmony of 90 degrees from each other, the pool shape may be either square or have L shape (i.e., squarish). Otherwise, if the angle histogram consists of lots of angles, meaning that the distribution of angles of the pool walls may be vaster, it may follow that the pool is not rectangular shaped (i.e., circular, kidney or free shaped).

In some embodiments, in case that the sensors 254 include a magnetometer, then its readings may be taken while the pool equipment unit 202 is navigating the water pool 204, either in a preliminary scan used for calibration of the magnetometer, such as illustrated in FIG. 4A, or in other subsequent scan cycles, e.g., during a pool setup scan such as illustrated in FIG. 4B. In this manner, a determination of a direction of a constant pool north may be facilitated.

In some embodiments, the magnetometer calibration such as by the exemplary process illustrated in FIG. 4A may be performed by calculating a center of all data points, then excluding outliers based on their distance to the center calculated, and recalculating the center of the remaining data points to be used in the magnetic direction calculations.

In some embodiments, while navigating the water pool 204 by the pool equipment unit 202, there may be measured by the sensors 254 and stored in storage 214 respective pitch values of the pool equipment unit 202 when travelling on a floor of the water pool 204, so as to determine how pitched is the floor. The pitch values may help to determine a pool "north" direction without usage of a magnetometer, suggest a direction of the scan cycle end, suggest areas in the water pool that a user may point to for specified cleaning tasks, and/or the like. Optionally, the pitch values thus gathered may guide a decision about a scan type (e.g., maze, saw tooth, and/or the like) that may be optimal for cleaning the water pool 204, for example, if the floor of the water pool 204 has lots of slopes (i.e., low "stability") then a saw tooth scan may be less desired. Preferably, after each wall hit in either direction, the pool equipment unit 202 may be required to return to the floor for better performance of the pool equipment unit 202 throughout the scan.

In some embodiments, while navigating the water pool 204 by the pool equipment unit 202, whether during the pool setup scan and/or in further scans, the pool equipment unit 202 may hit and climb stairs and/or a sun ledge. Accordingly, there may be thus facilitated a determination of respective directions of the stairs and/or sun ledge in the water pool 204 relative and/or in reference to the direction of the pool north, such as measured by a magnetometer of the sensors 254 and/or as determined by the main slope of the pool according to the pitch values gathered. Such determination may also provide for the general directions of the stairs and/or sun ledge to which the pool equipment unit 202 may need to turn when a user wishes to clean them specifically.

In some embodiments, the data gathered during the pool setup scan such as illustrated on FIG. 4B and optionally during the magnetometer calibration as illustrated on FIG. 4A may then undergo a post-processing stage such as illustrated on FIG. 4C in which the data may be utilized by the mapping engine 220 to determine how much time may be needed for a full scan of the water pool 204 by the pool equipment unit 202, a preferred type of scan for performing a specified task (e.g. pool cleaning), respective directions where there may be stairs and/or a sun ledge, and so on.

For example, pool cleaning time may be estimated by calculating an average of all travel times of the pool equipment unit 202 while navigating the water pool 204 during the pool setup scan (optionally excluding very short and/or long travel times), raising the average to the second power and applying a ratio and offset factor based on pool cleaning time for known pool size, e.g., for a rectangular pool of about 30 m² the cleaning time may be about 90 minutes.

In another example, pool shape may be determined by ordering the walls of the water pool 204 detected during the scan based on their detected value of yaw angle (e.g. by magnetometer, gyroscope and/or the like included in sensors 254 ) and calculating or retrieving the angle difference between them to determine if the walls scanned are all close to a harmony of 90 degrees from each other, e.g., 10, 100, 190, 280 and/or the like, meaning that the pool shape may be considered rectangular-like or similar (L shape, for example). The pool shape may be then determined by a number of values greater than 40 degrees, if it is between 3 and 5 the pool may be set to be rectangular and free shaped otherwise. In case of a rectangular-like pool shape, a corner may be detected between a pair of walls where the angle difference is close to 90 degrees.

In yet another example, stability may be determined by a percentage of total time in which the pool equipment unit 202 had been in an unstable condition (e.g., sharp change of pitch, roll, and/or the like, meaning that the pool equipment unit 202 may have a difficulty to drive straight) for more than a predetermined consecutive period of time, e.g., 5 seconds and/or the like.

In yet another example, a preferred type of scan for cleaning the water pool 204 may be determined, e.g., maze scan, saw tooth scan in which the pool equipment unit 202 turns to a corner to start the scan therefrom and then traverses the pool floor in a "zig zag" pattern until reaching its opposite end. Optionally, the saw tooth scan may be chosen only in case that the pool shape is determined to be square (or very similar to square with 90 degrees harmony between wall angles) and does not have too high slopes.

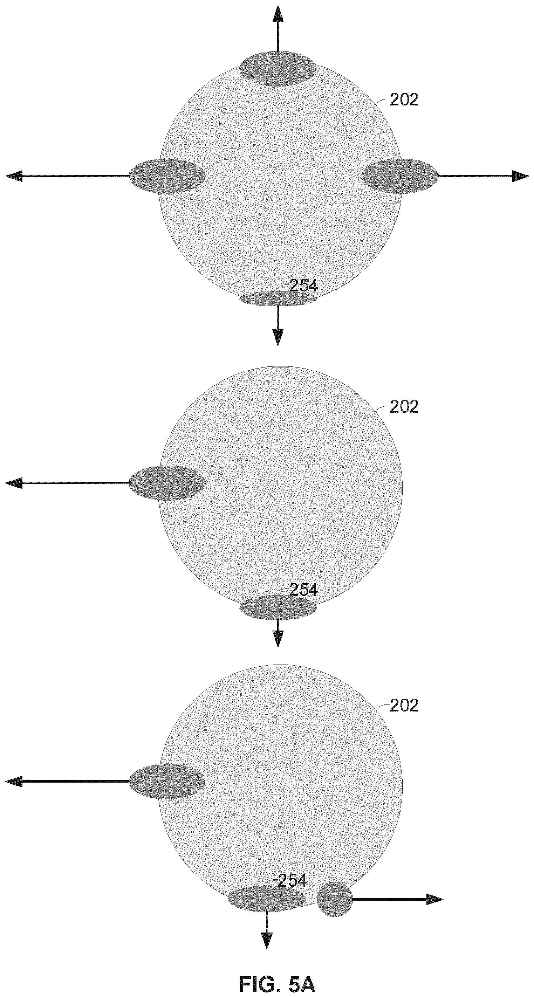

Reference is now made to FIG. 5A which is a schematic illustration of exemplary multi direction sonar arrangements that may each be utilized in mapping of a water pool explored by a dynamic pool equipment unit, according to some embodiments.

As shown on FIG. 5A in the middle and/or bottom portions, in some embodiments, the pool equipment unit 202 may be provided with, e.g., have at its corner and/or the like, a two way and/or three way arrangement of sonar sensors 254 transmitting to the front and right side (in the two way arrangement) or to the front, right and left sides (in the three way arrangement) of the pool equipment unit 202, to measure respective distances to wall surfaces of the water pool 204.

Additionally or alternatively, as shown on FIG. 5A in the top portion, the pool equipment unit 202 may also have 4-16 way sonar sensors 254 mounted on top and/or bottom portions of the pool equipment unit 202 to transmit to all four directions at a same time and/or turn 360 degrees continuously to measure distances to wall surfaces of the water pool 204, i.e., measure acoustic signal reflections therefrom, in all directions.

Optionally, respective transducers of the sonar sensors 254 may burst an acoustic wave and receive feedback after predetermined amount of time, e.g., X seconds, to measure the distance and send to the controller 252 and/or the mapping engine 220 for further processing.

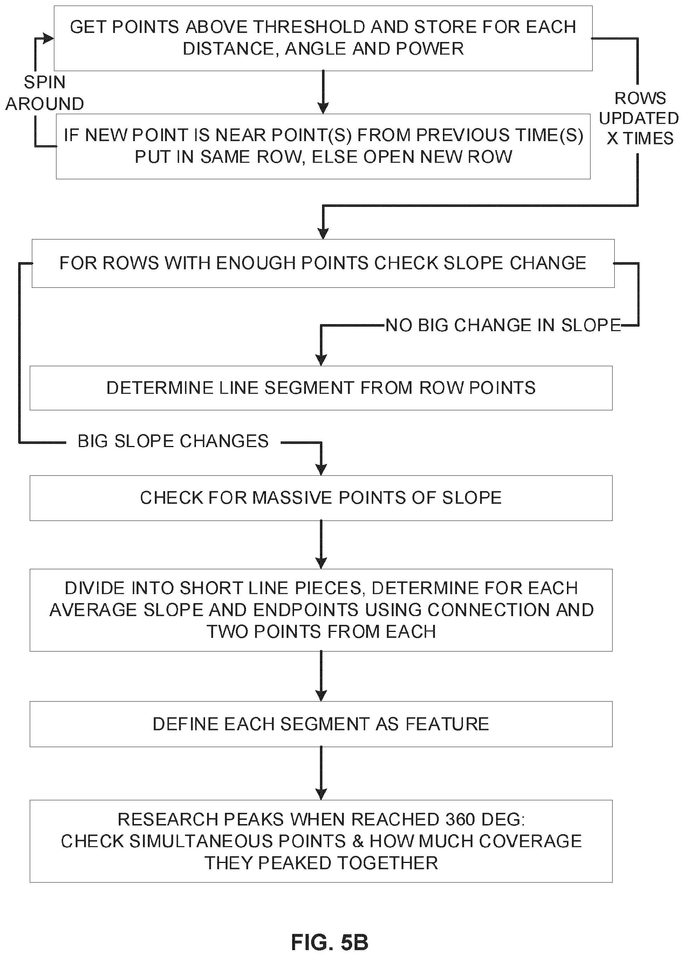

Reference is now made to FIG. 5B which is a flowchart schematically representing an optional flow of operations for sonar data analysis that may be utilized in mapping of a water pool explored by a dynamic pool equipment unit, according to some embodiments.

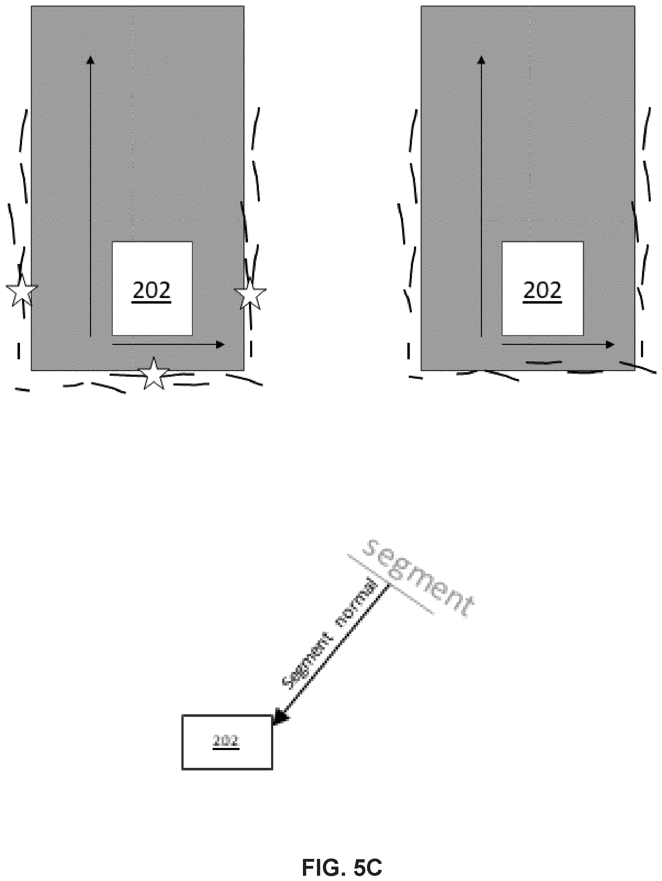

Reference is also made to FIG. 5C which is a schematic illustration of an exemplary sonar data analysis that may be utilized in mapping of a water pool explored by a dynamic pool equipment unit, according to some embodiments.

In some embodiments, in each transmitting cycle of the sonar sensors 254, there may be received a reflection of the transmitted sonar signal comprising a plurality of data points, each representing a distance from the pool equipment unit 202 up to a predefined threshold, e.g., 15 meters and/or the like, namely a total travel time of up to 15 meters and back or 30 meters in total. Each data point represents a sound level (i.e., energy) that a respective transducer received in a specific moment along a timeline, corresponding to a duration of time elapsed from transmittance of the signal.

One technical challenge of processing the sonar data to determine the distances to wall surfaces of the water pool 204 is that the measurement may be very noisy and contain many fault points which may lead to incorrect determination of such fault points as belonging to obstacles. In order to overcome such problems, there may be performed sonar signal measurement and data analysis as described and illustrated herein.

In some embodiments, sonar data may be gathered by iterative measurements in which the pool equipment unit 202 spins around and measures reflections of transmitted sonar signals by the sonar sensors 254 to obtain an acoustic image of the water pool 204. From each sonar signal measurement cycle, there may be extracted peak values, including distance, angle, power level, and/or the like for each respective data point. Then the pool equipment unit 202 may spin around a bit further, and another sonar signal may be measured for which another set of peaks may be obtained, and so forth. In each cycle, peaks that are relatively similar to peaks from previous cycles may be stored together whereas others are stored each at a different row of a peak histogram.

For example, during a first measurement there may be obtained peaks at 0.8, 2, and 5 meters, and at a second measurement there may be obtained peaks at 0.85 and 2.1 meters. In this example, the second measurement provided peaks that may be fit the peaks of the previous signal at 0.8m, 2m whereas the peak at 5m from the first signal has no corresponding peak in the second signal. In such case, if counts of the peaks at 0.8m and 2m increase, meaning that they already came twice or more in multiple sonar signals, this may indicate detection of actual obstacle or wall surface. As for the third peak at 5m, after the second measurement it is missing one count, and if after a predetermined number of cycles, e.g. another X signals and/or the like, no same or similar peaks at 5m are obtained then it may be dropped altogether. Thus, at the end of the measurement cycles there may remain only a set of peaks that came up frequently enough, which set of peaks may represent an obstacle and/or continuous wall at sufficient likelihood, since a sufficient amount of signal peaks came from it.

The data points at each row of the peak histogram, also referred to herein as "segments", may be then further processed to determine whether they represent a straight or curved line, by testing their slopes' average and/or standard deviation. For example, a segment with a steady slope and/or low standard deviation may be considered as straight and fitted to a straight line for the map building by mapping engine 220. Otherwise, a segment with no steady slope may be divided into line pieces of a short, predetermined length, e.g., 20-40 centimeters and/or the like. For each such segment created, there may be stored a set of features for further analysis, such as a midpoint of the segment, endpoints of the segment, the power of the sonar sound level of hit in each of the endpoints, minimum and/or maximum sound level point(s), and/or the like.

In some embodiments, after the segments' creation from the data points, there may be extracted directions of the water pool 204, by computing for each segment an average slope and by considering its distance from the pool equipment unit 202 compute a histogram that the peaks therein may define which directions in the final sonar image are the strongest. In this way, the main direction of the water pool 204 for navigating the pool equipment unit 202 may be determined.

Additionally or alternatively, for each segment there may be computed a normal of its slope, namely a vector perpendicular to the slope of the segment, and a point in the segment from which a line in a direction of the segment normal may reach to a position where the pool equipment unit 202 may be located at. In case that the point thus determined also corresponds to the maximum sound level for that segment or sufficiently approximates it, then this point may be considered as "strong point" which may represent a point on a wall surface that is at 90 degrees relative to the pool equipment unit 202. The set of "strong points" thus obtained may be utilized to facilitate determining a distance of the pool equipment unit 202 from wall surfaces of the water pool 204 during navigation.

FIG. 5B illustrates the exemplary sonar data analysis flow described hitherto, including gathering datapoints of signal peaks, segments creation from peaks with enough counts, analysis of segments' slopes to detect wall surfaces, and so forth.

FIG. 5C illustrates on the top right segments created from noisy datapoints measured by the sonar sensors included in sensors 254 of the pool equipment unit 202 as the pool equipment unit 202 made a spin in a square pool, using sonar data analysis such as illustrated and described herein with reference to FIG. 5B.

As can be seen in FIG. 5C, the segments' directions are in general in conformity with the main directions of the square pool that may be utilized in navigation of the pool equipment unit 202 in the pool.

On the top left of FIG. 5C there are illustrated by stars the set of "strong points" determined using the sonar data analysis as discussed herein. On the bottom of FIG. 5C there is exemplified the determination of such "strong point" according to the segment's slope, its normal, and the point on the segment and/or its slope from which a line at the direction of the normal reaches the pool equipment unit 202.

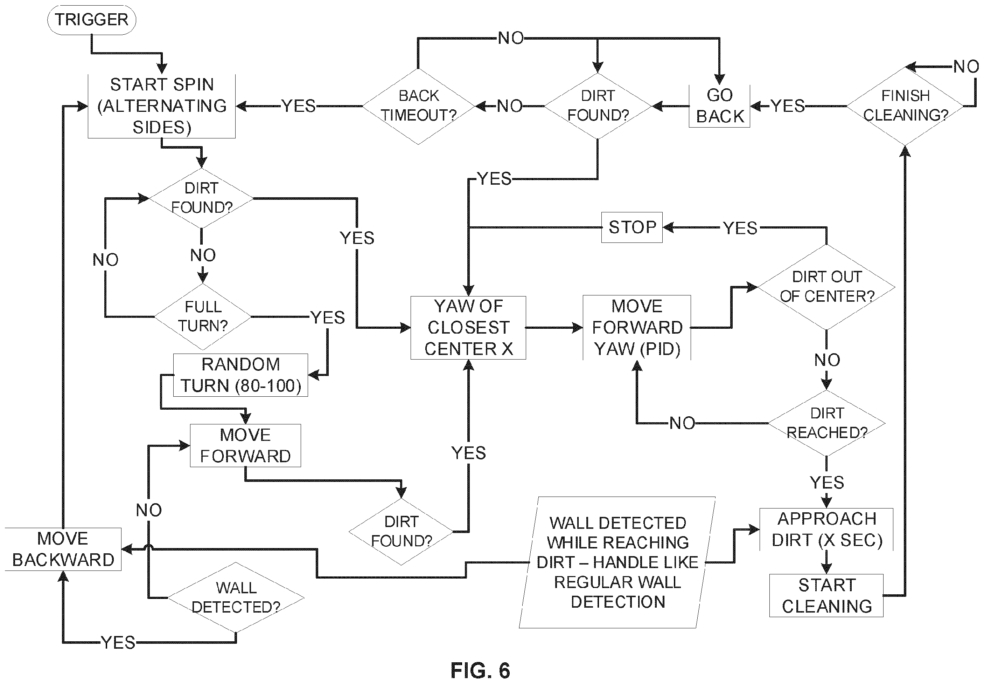

Reference is made now to FIG. 6 which is a flowchart schematically representing an optional flow of operations for navigating a dynamic pool equipment unit in a water pool by tracking dirt imaged on camera, according to some embodiments.

In some embodiments, the pool equipment unit 202 may explore the water pool 204 and/or perform tasks such as cleaning and/or the like, according to particular locations in the water pool 204 of large amounts of dirt, as may be detected by the mapping engine 220 using imaging data acquired by imaging sensors included in sensors 254, e.g. a camera and/or the like. It will be appreciated that in some cases, dirt may be concentrated in a few spots and/or even regions of the water poll 204, allowing for an optimized cleaning strategy.

In some embodiments, upon detection of dirt, the pool equipment unit 202 may navigate to the dirt detected to clean it. In cases where several locations of dirt concentrations detected, there may be taken one of the following approaches for prioritization among these locations to each of which the pool equipment unit 202 may navigate in turn:
1. First In First Out (FIFO) - the pool equipment unit 202 may lock on the first element (i.e., dirt concentration) detected and begin tracking it. Once the pool equipment unit 202 is inside the target cleaning zone, the cleaning cycle may be initiated thereby.
2. Dirt Check - similar as in the FIFO approach, the pool equipment unit 202 may traverse the dirt locations one after another in the order detected, but with a difference that after the cleaning cycle is completed, the pool equipment unit 202 may return and a check may be performed (e.g. using imaging data from the camera) that the dirt has been cleaned.
3. Dirt Check Simplified - same as in the Dirt Check approach, but with a shorter cleaning cycle.
4. Cluster - all dirt locations detected may be collected during a spin of the pool equipment unit 202 around its axis and once the spinning cycle ends, a decision may be made on an optimal direction at which the cleaning cycle should begin.

As shown in FIG. 6, an optional flow of operations for navigating the dynamic pool equipment unit 202 in a water pool such as 204 according to dirt detection on imaging data acquired by a camera included in the sensors 254, may be conceptually divided into the following 4 parts:
1. Search
2. Tracking
3. Cleaning
4. Verification

In some embodiments, the search phase may comprise the following operations as discussed further herein:
- Full Spin
- Random Turn
- Forward Move
- Backwards Move

The search may begin with a full spin of the pool equipment unit 202, where this spin turns to the side closest to 0 [rad], so as to prevent any cables of the pool equipment unit 202 from knotting. After this full spin, if no dirt was found, there may be randomly selected an angle between 80 and 100 degrees and the pool equipment unit 202 may turn towards it. Once the pool equipment unit 202 has finished turning, it may move forward until a wall hit. After a wall hit the pool equipment unit 202 may move backward for a few seconds and begin the cycle anew.

If during the search phase, dirt has been found, the pool equipment unit 202 may stop and wait for a window of detections to validate the detection. If the detection is not validated (false positives) the pool equipment unit 202 may continue with the last movement it was performing. Otherwise, in case of a validated detection, the pool equipment unit 202 may begin the tracking phase described herein.

In some embodiments, tracking may take place as follows. Once a tracking buffer is full, a target may be selected based on a detected dirt location being the closest to a center of the water pool 204 with at least some number of positive detections per frame. If the target's center is inside a central image range and below a bottom line, the pool equipment unit 202 may move to the cleaning phase as described herein. Otherwise, if the pool equipment unit 202 is inside the central range but above the bottom line, it may move closer. If the target is to the sides, a turn request may be made until the aforesaid conditions are met. If the center is close to the central range but not inside, some extra angle may be added to the request. This is done to prevent the pool equipment unit 202 from being stuck in a movement dead zone. If the pool equipment unit 202 has found the target and remains in view, a special detection mode may be activated where the calculation may be done per frame instead of multiple detections.

In some embodiments, cleaning may take place as follows. During the cleaning phase the detections may be disabled, and the pool equipment unit 202 may be solely controlled by timer, as the dirt may be outside the camera's Field of View (blind cleaning). The pool equipment unit 202 may move forward, turn counterclockwise and backwards, and this process may be repeated a few times, and finally the pool equipment unit 202 may go back to the search phase. If a wall is detected when moving forward it goes backwards and begins a new spin search. If the wall detection is triggered while moving backwards, the pool equipment unit 202 may return to a forward search mode.

In some embodiments, verification may take place as follows. Sometimes the pool equipment unit 202 may not be able to pick-up the dirt (e.g., dirt might have moved due to water pressure when the pool equipment unit 202 approaching the dirt object), this step aims to give the pool equipment unit 202 another chance to clean it. In this step the pool equipment unit 202 may return to the orientation that it had during approach and then move backward for a few seconds to verify the clean-up. If dirt has been found the pool equipment unit 202 may begin the tracking once again, and if no dirt is found the pool equipment unit 202 may begin a new search cycle.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant systems, methods and computer programs will be developed and the scope of the terms pool equipment units, sensors, and sensing technologies are intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, an instance or an illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals there between.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

It is the intent of the applicant(s) that all publications, patents and patent applications referred to in this specification are to be incorporated in their entirety by reference into the specification, as if each individual publication, patent or patent application was specifically and individually noted when referenced that it is to be incorporated herein by reference. In addition, citation or identification of any reference in this application shall not be construed as an admission that such reference is available as prior art to the present invention. To the extent that section headings are used, they should not be construed as necessarily limiting. In addition, any priority document(s) of this application is/are hereby incorporated herein by reference in its/their entirety.

## Claims

1. A computer implemented method of navigating a dynamic pool equipment unit in a water pool, comprising:
using at least one processor for:
receiving sensory data captured by a plurality of sensors of a dynamic pool equipment unit moving in a water pool, the plurality of sensors employ a plurality of different sensing technologies;
mapping, based on analysis of the sensory data, at least one geometrically distinguishable surface of the water pool which is geometrically distinguishable from any adjacent surface of the water pool;
generating a map of the water pool based on the mapped at least one geometrically distinguishable surface; and
outputting the water pool map for navigating at least one dynamic pool equipment unit in the water pool during execution of at least one dynamic activity.

2. The computer implemented method of claim 1, wherein each geometrically distinguishable surface is geometrically distinguishable from its adjacent surfaces by at least one geometric attribute of a group comprising: a different depth, and a different slope.

3. The computer implemented method of claim 1, wherein the dynamic pool equipment unit is operated to explore the water pool starting from a random start point to search for at least one local highest point of the water pool which is mapped as a highest surface.

4. The computer implemented method of claim 1, wherein the dynamic pool equipment unit is operated to explore the water pool by moving in a plurality of directions from each mapped distinguishable surface.

5. The computer implemented method of claim 1, wherein mapping the at least one geometrically distinguishable surface is based on at least one motion parameter of the dynamic pool equipment unit derived from the analysis of the sensory data, the at least one motion parameter is selected from a group comprising: orientation, angular velocity, acceleration, speed, depth, and distance.

6. The computer implemented method of claim 1, wherein mapping the at least one geometrically distinguishable surface is based on positioning of at least one fixed element identified in the water pool based on the analysis of the sensory data.

7. The computer implemented method of claim 1, wherein the plurality of sensors comprise at least one pressure sensor adapted to measure a depth of the dynamic pool equipment unit.

8. The computer implemented method of claim 1, wherein the plurality of sensors comprise at least one gyroscope adapted to measure an orientation of the dynamic pool equipment unit.

9. The computer implemented method of claim 1, wherein the plurality of sensors comprise at least one accelerometer adapted to measure an acceleration of the dynamic pool equipment unit.

10. The computer implemented method of claim 1, wherein the plurality of sensors comprise at least one magnetometer adapted to measure an absolute direction of the dynamic pool equipment unit.

11. The computer implemented method of claim 1, wherein the plurality of sensors comprise at least one image sensor adapted to capture images of an environment surrounding the dynamic pool equipment unit.

12. The computer implemented method of claim 1, wherein the plurality of sensors comprise at least one low-end sound navigation and ranging (SONAR) sensor adapted to map objects in the water pool.

13. The computer implemented method of claim 1, wherein the plurality of sensors comprise at least one low-end light detection and ranging (LiDAR) sensor adapted to map objects in the water pool.

14. The computer implemented method of claim 1, wherein the plurality of sensors comprise at least one proximity sensor adapted to measure a distance of the dynamic pool equipment unit from at least one nearby object.

15. A system for navigating a dynamic pool equipment unit in a water pool, comprising:
a plurality of sensors employing a plurality of different sensing technologies; and
at least one processor adapted to execute a code, the code comprising:
code instructions to receive sensory data captured by a plurality of sensors of a dynamic pool equipment unit moving in a water pool, the plurality of sensors employ a plurality of different sensing technologies;
code instructions to map, based on analysis of the sensory data, at least one geometrically distinguishable surface of the water pool which is geometrically distinguishable from any adjacent surface of the water pool;
code instructions to generate a map of the water pool based on the mapped at least one geometrically distinguishable surface; and
code instructions to output the water pool map for navigating at least one dynamic pool equipment unit in the water pool during execution of at least one dynamic activity.
